(19) Europäisches Patentamt
European Patent Office
Office européen des brevets

(11) **EP 3 636 808 A1**

(12) **EUROPÄISCHE PATENTANMELDUNG**

(43) Veröffentlichungstag:
**15.04.2020 Patentblatt 2020/16**

(51) Int Cl.:
***D01D 10/02*** *(2006.01)* ***D02J 1/22*** *(2006.01)*
***D01F 6/60*** *(2006.01)*

(21) Anmeldenummer: **18199730.5**

(22) Anmeldetag: **10.10.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Evonik Operations GmbH**
**45128 Essen (DE)**

(72) Erfinder:
• **DE GANS LI, Lan, Dr.**
**45478 Mülheim an der Ruhr (DE)**

• **WIELPÜTZ, Martin, Dr.**
**48308 Senden (DE)**
• **HARTMANN, Markus**
**48324 Sendenhorst (DE)**
• **BÜCKER, Dirk Heinrich**
**40878 Ratingen (DE)**

(74) Vertreter: **Evonik Patent Association**
**c/o Evonik Industries AG**
**IP Management**
**Bau 1042A/PB 15**
**Paul-Baumann-Straße 1**
**45772 Marl (DE)**

(54) **GERECKTE POLYAMIDFILAMENTE**

(57)     Gereckte Filamente basierend auf lineare, verzweigte oder cylclische aliphatische oder teilaromatische Polyamide, wobei die Filamente gereckt wurden bei einer Temperatur zwischen Glasübergangstemperatur und Schmelzpunkt und wobei die Filamente unter voller Zuglast auf Raumtemperatur abgekühlt werden.

**EP 3 636 808 A1**

**Beschreibung**

Die vorliegende Erfindung ist auf gereckte Filamente basierend auf linearen, verzweigten oder cylclischen aliphatischen oder teilaromatischen Polyamiden, wobei die Filamente gereckt wurden bei einer Temperatur zwischen Glasübergangstemperatur und Schmelzpunkt und wobei die Filamente unter voller Zuglast auf Raumtemperatur abgekühlt werden, gerichtet.

Faserverstärkte Materialien beruhen meist auf der Verwendung von Glas- oder Carbonfasern in Polymeren. Damit besteht grundsätzlich das Problem der Kompatibilität der Fasern mit dem Matrixmaterial und damit Bindungsproblemen zwischen Verstärkungsmaterial und Matrix. Dies ist häufig ein besonderes Problem bei der Verwendung von Thermoplasten als Matrix. Weiterhin sind diese Materialien nicht recyclingfähig, da die Abtrennung der Fasern sehr aufwendig ist.

Im Stand der Technik sind vorwiegend zwei Verfahren zum Strecken von Polyolefinen, wie Polyethylen oder Polypropylen, bekannt, das Schmelzspinnverfahren (WO 2004/028803 A1) und das Gelspinnverfahren (WO 2010/057982 A1). Polyolefine lassen sich einfach bei Raumtemperatur recken, wobei die Reckgeschwindigkeit aufgrund der Exothermie des Reckens relativ niedrig gewählt werden muss. Die gereckten Polyolefine weisen den Nachteil auf, dass sie nach dem Recken bei Verarbeitung unter erhöhten Temperaturen sehr stark schrumpfen und deshalb zunächst bei der gewünschten Arbeitstemperatur zunächst äquilibriert werden müssen. Weiterhin weisen gereckte Polyolefine sehr limitierte mechanische Werte auf, die ihre Einsetzbarkeit als Verstärkungsfasern begrenzen. Insbesondere die mangelnde thermische Stabilität, sowie die mangelnde Druckfestigkeit (Kaltverformbarkeit) sind nachteilig.

DE 766441 beansprucht eine Verbesserung mechanischer Werte gestreckter Polyamiddrähte durch gezielte Schrumpfung mit Hilfe von Wasser oder Wasserdampf. Im Sinne der vorliegenden Erfindung sind Schrumpfungsprozesse jedoch nachteilhaft.

WO 2013/190149 A1 offenbart duktile Fasern diverser Thermoplasten, bevorzugt Polypropylen und Polyethylen als Bestandteil sogenannter PrePregs. Darunter werden Verwebungen von thermoplastischen Fasern mit spröden Fasern, im Besonderen Kohlenstofffasern verstanden. Diese Materialien werden dann bevorzugt in einer Matrix aus dem Material der duktilen Fasern tiefgezogen oder verpresst. Dabei schmilzt die duktike Faser auf und führt zu einer Verbesserung der Bindung zwischen Matrix und spröder Faser.

Die Herstellung von vollaromatischen Polyamidfasern, wie Poly(p-phenylene terephthalamid) (PPTA, Aramid unter den Markenbezeichnungen : Kevlar® (Warenzeichen der DuPont, USA), Twaron® (Warenzeichen der Teijin Lim, Japan) werden in US 3,869,430 A beschrieben. Diese Fasern werden im sogenannten Nass-Spinnverfahren aus einer Schwefelsäurelösung hergestellt. Dieses Verfahren ist teuer, technisch schwierig und umweltgefährdend.

In WO 2015/107024 A1 werden teilaromatische Polyamide mit einem Reckfaktor von unter 5 gereckt, die Recktemperatruen liegen bevorzugt möglichst knapp über der Glasübergangstemperatur. Eventueller Schrumpfung kann entgegengewirkt werden, indem die gereckten Filamente unter Zuglast möglichst hoch erhitzt werden, wobei diese Temperatur über der Recktemperatur liegt. Damit müssen die Filamente also zweimal erhitzt werden.

In US 3,393,252 werden Mischungen zweier nicht isomorpher Polyamide offenbart, deren Glasübergangspunkte unter 120 °C und über 140 °C liegen müssen, welche zur Stabilisierung von Reifen verwendet werden.

Unter dem Begriff Filament werden im Rahmen dieser Erfindung Fasern, Filme oder Bänder verstanden. Insbesondere Filme sind bevorzugt in mehr als einer Richtung gereckt.

Aufgabe der vorliegenden Erfindung waren daher gereckte Filamente aus aliphatischen oder teilaromatischen Thermoplasten herzustellen, und ein ungefährliches, einfaches und lösemittelfreies Verfahren zum Strecken von Polyamid zur Verfügung zu stellen.

Die Aufgabe wurde durch gereckte Filamente aus Polyamid gelöst, wobei die Filamente nach der Reckung unter voller Zuglast abgekühlt werden.

Gegenstand der vorliegenden Erfindung sind gereckte Filamente enthaltend mindestens 80 Gew.-%, bevorzugt 85 Gew.-%, mehr bevorzugt 90 Gew.-%, weiter mehr bevorzugt 95 Gew.-% und insbesondere bestehend aus linearen, verzweigten oder cylclischen aliphatischen oder teilaromatischen Polyamiden, wobei die Filamente gereckt wurden bei einer Temperatur zwischen Glasübergangstemperatur und Schmelzpunkt und wobei die Filamente unter voller Zuglast auf unter 100 °C abgekühlt werden.

Ein weiterer Gegenstand der Erfindung ist ein Verfahren zur Herstellung der erfindungsgemäßen gereckten Filamente.

Ein weiterer Gegenstand der Erfindung ist die Verwendung der erfindungsgemäßen gereckten Filamente zur Herstellung von Verbünden.

Ein weiterer Gegenstand der Erfindung ist die Verwendung der erfindungsgemäßen gereckten Filamente zur Herstellung von Wickellagen.

Ein Vorteil der erfindungsgemäßen gereckten Filamente ist, dass diese bei erhöhter Temperatur wenig schrumpfen, also kaum einen Relaxationseffekt aufweisen.

Weiterhin vorteilhaft ist, dass die erfindungsgemäßen gereckten Filamente eine hohe mechanische Stabilität aufweisen. Bevorzugt wird die mechanische Stabilität in Form einer Bruchspannung in Richtung der Reckung gemessen.

Weiterhin vorteilhaft ist, dass die erfindungsgemäßen gereckten Filamente eine hohe mechanische Stabilität auch bei erhöhter Temperatur aufweisen.

Die erfindungsgemäßen gereckten Filamente, die erfindungsgemäßen Verbünde enthaltend die erfindungsgemäßen Filamente sowie die erfindungsgemäße Herstellung und Verwendung werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit aufgeführt sind, sondern auch alle Teilbereiche und Teilgruppen von Verbindungen, die durch Herausnahmen von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören. Werden nachfolgend %-Angaben gemacht, so handelt es sich, wenn nicht anders angegeben, um Angaben in Gewichts-%. Bei Zusammensetzungen beziehen sich die %-Angaben, wenn nicht anders angegeben auf die Gesamtzusammensetzung. Werden nachfolgend Mittelwerte angegeben, so handelt es sich, wenn nicht anders angegeben, um Massenmittel (Gewichtsmittel). Werden nachfolgend Messwerte angegeben, so wurden diese Messwerte, wenn nicht anders angegeben, bei einem Druck von 101325 Pa und einer Temperatur von 25 °C ermittelt.

Im Schutzumfang liegen im kommerziellen Handeln übliche Konfektionierungen und Abpackungen der erfindungsgemäßen Produkte sowohl als solche, als auch in eventuellen Zerkleinerungsformen soweit diese nicht in den Ansprüchen definiert sind.

Die Polyamide sind herstellbar aus einer Kombination von Diamin und Dicarbonsäure, aus einer ω-Aminocarbonsäure und/oder dem entsprechenden Lactam. Hierbei enthält die ω-Aminocarbonsäure bzw. das Lactam bzw. ein Gemisch aus verschiedenen derartigen Monomeren im arithmetischen Mittel bevorzugt mindestens 7,0 C-Atome. Bei einer Kombination von Diamin und Dicarbonsäure beträgt das arithmetische Mittel der C-Atome von Diamin und Dicarbonsäure bevorzugt mindestens 7,0. Geeignete erfindungsgemäße Polymere sind PA 6.9 (herstellbar aus Hexamethylendiamin [6 C-Atome] und Nonandisäure [9 C-Atome]; das Mittel der C-Atome in den Monomereinheiten beträgt hier somit 7,5), PA 6.8, PA 6.10, PA 6.12, PA 6.13, PA 6.14, PA 6.18, PA 10.6, PA 10.10, PA 10.12, PA 12.12, PA 10.13, PA 10.14, PA 11, PA 12, PA 6.T, PA 9.T, PA 10.T, PA 12.T, PA 14.T, PA PACM.10 (PACM = 4,4'-diaminocyclohexylmethan), PA PACM.12, PA MACM.10 (MACM = 3,3'-Dimethyl-4,4'-diaminocyclohexylmethan), PA MACM.12, PA TMD.10 (TMD = 1,6-Diamino-2,4,4-trimethylhexan, 1,6-Diamino-2,2,4-trimethylhexan), PA TMD.12 sowie generell Polyamide, die sich von einem Diamin sowie Nonadecandisäure herleiten. Geeignet sind auch Copolyamide; die genannten Bausteine Diamin und Dicarbonsäure, ω-Aminocarbonsäure sowie Lactam können hierbei nach Belieben kombiniert werden. Darüber hinaus sind auch auf diesen Polyamiden basierende Polyetheramide sowie Polyetheresteramide erfindungsgemäß geeignet. Polyetheramide sind aus dicarbonsäuregeregelten Polyamidblöcken und Polyetherdiaminblöcken aufgebaut, Polyetheresteramide entsprechend aus dicarbonsäuregeregelten Polyamidblöcken und Polyetherdiolblöcken. Die Polyethereinheiten enthalten in der Regel 2 bis 4 C-Atome je Ethersauerstoff. Polyetheramide und Polyetheresteramide sind dem Fachmann bekannt und in einer Vielzahl von Typen handelsüblich.

Vorzugsweise sind bei den Polyamiden in den Monomereinheiten im arithmetischen Mittel maximal 40 und besonders bevorzugt maximal 26 C-Atome enthalten.

Bevorzugt enthalten die Polyamide keine Lösemittel.

Bevorzugt wird die minimale Recktemperatur $T_{reck, min}$ mit Hilfe Gleichung (1):

$$T_{reck,min} = \left( \left( T_m - T_g \right) * X_C \right) + T_g \qquad (G1)$$

bestimmt, wobei $T_m$ = Schmelzpunkt, $T_g$ = Glasübergangstemperatur und $X_C$ die Kristallinität sind, und wobei die Kristallinität bestimmt wird mit Gleichung (2)

$$X_C = \frac{\Delta H_m}{\Delta H_m^0} \qquad (G2)$$

Die Größen $T_m$, $T_g$ und $\Delta H_m$ werden im Umfang der vorliegenden Erfindung mit Hilfe der DSC bestimmt, bevorzugt nach EN ISO 11354-1:2016D bestimmt, mehr bevorzugt wie in den Beispielen beschrieben.

Die Werte $\Delta H_m^0$ zur Berechnung der Kristallinität $X_c$ werden Tabellenwerken entnommen, z. B. van Krevelen "Properties of Polymers", 4 Ausgabe, 2009. Bevorzugt werden die folgenden Werte angenommen:

| Polyamid | $\Delta H_m^0$ | $T_g$ | $T_m$ |
|----------|------|------|------|
| PA 6 | 230 | 40 | 260 |
| PA 11 | 226 | 46 | 220 |
| PA 12 | 210 | 37 | 179 |
| PA 6.6 | 300 | 50 | 280 |
| PA 6.10 | 260 | 50 | 233 |
| PA 6.12 | 215 | 54 | 200 |
| PA 10.9 | 250 | | 214 |
| PA 10.10 | 200 | 60 | 216 |

Die Werte beziehen sich auf das Polyamid der ungereckten Filamente, im 2. Aufheizen in der DSC.

Bei einer Kristallinität von 0 und nahe 0 liegt die Recktemperatur mindestens 5 °C über der Glasübergangstemperatur. Bei einer Kristallinität von 1 und nahe 1 liegt die Recktemperatur mindestens 5 °C unter der Schmelztemperatur.

Bevorzugt werden die erfindungsgemäßen Filamente bei einer Temperatur oberhalb der minimalen Recktemperatur $T_{reck, min}$ gereckt, mehr bevorzugt bei einer Recktemperatur definiert nach Gleichung (G3)

$$T_{reck} = \left(\left(T_m - T_{reck,min}\right) * \gamma\right) + T_{reck,min} \qquad (G3)$$

wobei γ einen Wert von 0,05 bis 0,95 beträgt, bevorzugt 0,1 bis 0,8, mehr bevorzugt 0,2 bis 0,7, insbesondere bevorzugt 0,3 bis 0,6.

Bevorzugt sind die erfindungsgemäßen Filamente um einen Reckfaktor RF größer oder gleich 5, mehr bevorzugt RF größer oder gleich 10, oder größer gereckt worden.

Bevorzugt sind die erfindungsgemäßen Filamente im freien Raum ohne Berührung gereckt worden. Die Zone in der die Reckung stattfindet ist eine Zone in der die Atmosphäre der Umgebung erhitzt wird, also z. B. eine Art Rohrofen oder der Zwischenraum zweier beheizter Platten.

Die erfindungsgemäßen Filamente können kontinuierlich oder batchweise gereckt werden.

Bevorzugt werden statische Reckungen, also Reckungen, bei denen ein Ende des Filamentes in Ruhe bleibt mit Geschwindigkeiten von 10 mm/min bis zu 200 mm/min, bevorzugt von 20 mm/min bis zu 100 mm/min mehr bevorzugt 30 mm/min bis 80 mm/min gereckt.

Bevorzugte kontinuierliche Reckungen werden so durchgeführt, dass die niedrige Transportgeschwindigkeit bevorzugt im Bereich von 10 mm/min bis zu 3000 mm/min, bevorzugt von 50 mm/min bis zu 2500 mm/min, mehr bevorzugt 100 mm/min bis 2000 mm/min, weiter mehr bevorzugt 500 mm/min bis 1500 mm/min liegt. Über die Reckfaktoren wird die Geschwindigkeit der schneller laufenden Transporteinheit berechnet.

Die Reckung der erfindungsgemäßen Filamente kann durch nur einen Reckvorgang erfolgen oder durch mehrere aufeinander folgende. Im letzteren Fall muss die Recktemperatur höher gewählt werden. Mehr bevorzugt ist nur ein Reckvorgang.

Die erfindungsgemäßen Filamente werden nach dem Recken auf unter 100 °C abgekühlt. Diese Abkühlung erfolgt bevorzugt langsam, bevorzugt mindestens 10 Sekunden, mehr bevorzugt mindestens 20 Sekunden, weiter mehr bevorzugt mindestens 30 Sekunden, besonders bevorzugt mindestens 45 Sekunden, insbesondere bevorzugt mindestens 1 Minute.

Bevorzugt weisen die erfindungsgemäßen gereckten Filamente bei Erwärmung auf eine Temperatur unterhalb des Schmelzpunktes nur eine geringe Schrumpfung/Relaxation in Zugrichtung auf.

Bevorzugt liegt die Relaxationstemperaturtemperatur oberhalb der Glasübergangstemperatur und unterhalb der Schmelztemperatur, bevorzugt unterhalb der Recktemperatur.

Bevorzugt relaxieren die erfindungsgemäßen Filamente maximal 6 % in Bezug auf die gereckte Länge, bevorzugt maximal 5,5 %, mehr bevorzugt maximal 5 %, weiter mehr bevorzugt maximal 4,5 % und insbesondere bevorzugt maximal 4 %.

Mehr bevorzugt relaxieren die erfindungsgemäßen Filamente bei einer Relaxationstemperatur von 80 °C maximal 6 % in Bezug auf die gereckte Länge, bevorzugt maximal 5,5 %, mehr bevorzugt maximal 5 %, weiter mehr bevorzugt maximal 4,5 % und insbesondere bevorzugt maximal 4 %.

Bevorzugt erfolgt die Relaxation der erfindungsgemäßen Filamente nicht unter Zugspannung.

Die erfindungsgemäßen gereckten Filamente weisen bevorzugt eine Länge auf, die größer als das 5-fache einer im rechten Winkel zur Länge liegenden Dimension ist, bevorzugt sind die Filamente sogenannte endlos Filamente. Die Länge der Filamente wird grundsätzlich in Zugrichtung bestimmt.

Unter dem Begriff Filament werden im Rahmen dieser Erfindung Fasern, Filme oder Bänder verstanden. Insbesondere Filme sind bevorzugt in mehr als einer Richtung gereckt.

Die Einzelfilamente können zu Verbünden gefertigt werden; so sind bevorzugte Verbünde von Fasern Faserbündel und Garne, wobei die Faserbündel oder Garne zu weiteren Verbünden verarbeitet sein können, bevorzugt zu uni- oder mehr-direktionalen Gelegen, Verwebungen wie Matten, und Verstrickungen, oder auch Mischformen.

Gelege können sowohl aus, auf eine bestimmte Länge zugeschnittenen Filamenten, bestehen, als auch aus endlosen Filamenten in Form von Wickelungen um z.B. Rohre bestehen.

Bevorzugte Gelege aus endlosen Filamenten sind Wickellagen um Hohlkörper. Bevorzugt unidirektional oder mehrdirektional. Mehrdirektionale Wickellagen weisen in Bezug auf die Zugrichtung der Filamente einen Winkel auf. Dieser Winkel liegt bevorzugt im Bereich von 5 bis 120°, mehr bevorzugt von 30 bis 90°, insbesondere bevorzugt 15 bis 80°. Im Falle von Wickellagen um Rohre weisen diese Wickellagen in Bezug auf den Rohrmittelpunkt einen Steigungswinkel auf. Bevorzugt weisen unterschiedliche Wickellagen unterschiedliche Steigungswinkel auf. Bevorzugt sind die Wickellagen um Rohre in Bezug auf den Steigungswinkel so ausgelegt, dass nach einer Umdrehung die Ränder der Lage bündig aneinander anschließen.

Kurze Beschreibung der Abbildungen:

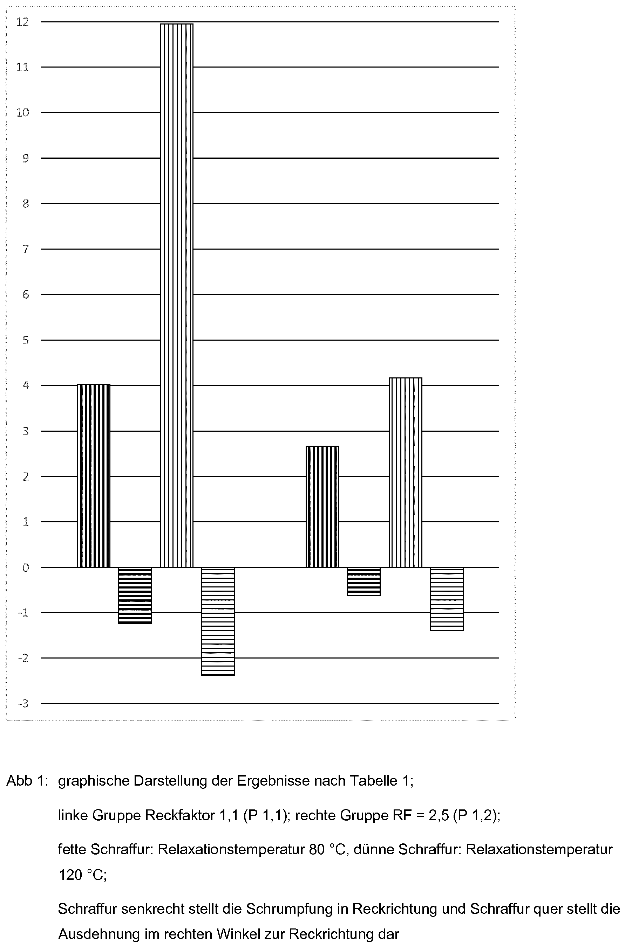

Abb 1:     graphische Darstellung der Ergebnisse nach Tabelle 1;
           linke Gruppe Reckfaktor 1,1 (P 1,1); rechte Gruppe RF = 2,5 (P 1,2);
           fette Schraffur: Relaxationstemperatur 80 °C, dünne Schraffur: Relaxationstemperatur 120 °C;
           Schraffur senkrecht stellt die Schrumpfung in Reckrichtung und Schraffur quer stellt die Ausdehnung im rechten Winkel zur Reckrichtung dar

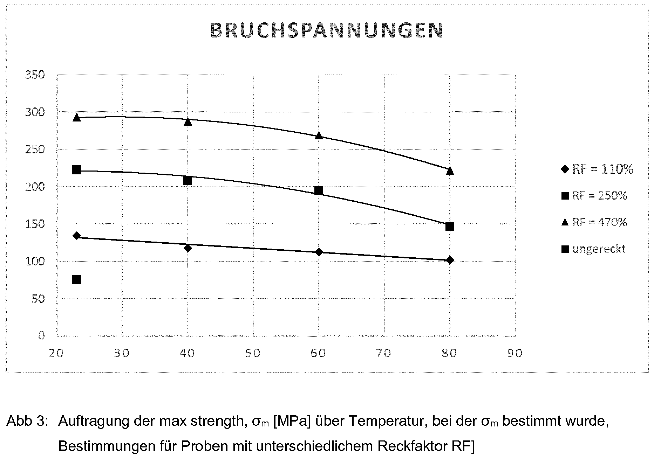

Abb 3:     Auftragung der max strength, $\sigma_m$ [MPa] über Temperatur, bei der $\sigma_m$ bestimmt wurde, Bestimmungen für Proben mit unterschiedlichem Reckfaktor RF]

Beispiele

Materialien

PA 6.10: VESTAMID Terra HS 16
PA 10.10: VESTAMID Terra DS 18
PA 12: VESTAMID L2101 nf (Evonik)
Trogamid: CX7323 (Evonik)

Methoden

DSC:

Perkin Elmer, Typ Diamond, automatische Peakerkennung und Integration, in Anlehnung an DIN EN ISO 11357-1: 2010, Aufheizrate 20 K/min.

Beispiel 1, Herstellung der Probestücke:

Die oben genannten Polyamide wurden mittels eines Extruders (Collin E45M) bei einer Temperatur von 5 bis 10°C über dem Schmelzhast Du mir die Ergebnisse zu diesen PAs auch geschickt, punkt (z. B. für PA 12 bei 250-260 °C) zu einem Bändchen mit einer Dicke von 650 $\mu$m extrudiert, auf 30-40 °C abgekühlt.

Die Bändchen wurden mit einer Geschwindigkeit von 1,4 m/min kalandriert, die Breite betrug 35 mm.

P 1,* sind Proben aus PA 12;
P 2,* sind Proben aus Trogamid;
P 3,* sind Proben aus PA 6.10;
P 4,* sind Proben aus PA 10.10.

Beispiel 2, Reckung der Probestücke:

Methode 1:

In einer Zugmaschine (Zwick, Z101-K) wurden Probestücke gemäß Beispiel 1 mit einer Geschwindigkeit von 50 mm/min bei 140°C gereckt. Vor der Zugentlastung wurden die Probestücke auf Raumtemperatur abgekühlt. Die Abkühlung wurde langsam innerhalb von 2 min oder schnell innerhalb von 10 sec durchgeführt.

Weitere Proben gemäß folgender Tabelle.

|  | P 1,0 | P 1,3 | P 2,0 | P 2,1 | P 3,0 | P 3,1 |
|---|---|---|---|---|---|---|
| Reckfaktor | 1 | 5 | 1 | 4,5 | 1 | 4,6 |
| Reckgeschwindigkeit [mm/min] |  | 50 |  | 50 |  | 25 |
| Recktemperatur [°C] |  | 140 |  | 60 |  | 80 |
| Abkühlung [min] |  | 2 |  | 2 |  | 2 |

Methode 2:

Ein Endlosprobestück gemäß Beispiel 1 wurde auf einer Spule zur Verfügung gestellt, auf einer kontinuierlich arbeitenden Maschine (Retech Drawing) wurde bei einer Materialzuführungsgeschwindigkeit von 4 rpm und einer Zuggeschwindigkeit von bis zu 32 rpm ein Reckfaktor (RF) von 8 gereckt. Die Reckung fand bei einer Temperatur von 140 °C statt.

Beispiel 3, Relaxationen:

Probestücke des Beispiels 2 wurden auf eine Länge von 10 cm zugeschnitten. Die Probestücke nach Beispiel 2, Methode 1 wurden an beiden Enden beschnitten. In einem Thermoschrank wurden die Probestücke ohne Zuglast, einzeln waagerecht liegend und frei beweglich, bei Temperaturen von 80 °C und 120 °C für 5 h gelagert.

Nach dem Abkühlen wurden die Proben in ihren beiden flächigen Dimensionen vermessen. Die Ergebnisse sind in Tabelle 1 und Abbildung 1 dargestellt.

Tabelle 1, relative Veränderung der Dimensionen der Probestücke nach Beispiel 3, Länge = in Zugrichtung, Breite = 90° zur Zugrichtung

| Probe | Länge 80 °C | Breite | Länge 120 °C | Breite |
|---|---|---|---|---|
| P 1,1; RF = 1,1 | -4,03 | +1,23 | -11,96 | +2,38 |
| P 1,2; RF = 2,5 | -2,67 | +0,61 | -4,17 | +1,39 |

Polyamid-Proben weisen eine geringe Relaxation auf und zeigen mit steigendem Reckfaktor überraschenderweise zunehmend geringere Relaxation.

Beispiel 4 mechanische Prüfungen:

Zugversuche

Aus den gereckten Bändchen wurden Schulterstäbe nach DIN 527-5:1997 (A Stab) gestanzt, die Dicke ergab sich aus dem Reckversuch und wurde nicht verändert.

Die Zugfestigkeit erfolgte an jeweils 3 Probenkörpern mittels Zugprüfgerät der Fa. Zwick bei unterschiedlichen Temperaturen. Prüfgeschwindigkeit = 5 mm/min, Einspannlänge = 120 mm und Messlänge des Incrementellen Aufnehmers = 75 mm.

Temperatur 23 °C, relative Feuchte 50 %.

Die Ergebnisse sind in den Tabellen 2 und 3, sowie Abbildung 3 angegeben.

Die Ergebnisse stellen den arithmetischen Mittelwert von 3 Probestücken dar.

Tabelle 2: T = 23 °C, Ergebnisse der Zugversuche gemäß Beispiel 4.

|  | P 1,0 | P 1,3 | P 2,0 | P 2,1 | P 3,0 | P 3,1 |
|---|---|---|---|---|---|---|
| Reckfaktor | 1 | 5 | 1 | 4,5 | 1 | 4,6 |
| E-Modul [MPa] | 982 | 3277 | 1572 | 3049 | 686 | 2189 |
| max strength, $\sigma_m$ [MPa] | 76 | 332 | 56 | 207 | 49,2 | 182 |
| max strain, $\varepsilon_m$ [%] | 189 | 9,1 | 88 | 11,8 |  |  |

(fortgesetzt)

|  | P 1,0 | P 1,3 | P 2,0 | P 2,1 | P 3,0 | P 3,1 |
|---|---|---|---|---|---|---|
| strength at break, $\sigma_b$ [MPa] | 73 | 332 | 55 | 207 | | |
| strain at break, $\varepsilon_b$ [%] | 181 | 9,12 | 102 | 12 | | |

Tabelle 3: max strength, $\sigma_m$ [MPa] für unterschiedliche Prüftemperaturen, Ergebnisse der Zugversuche gemäß Beispiel 4, für Proben mit unterschiedlichen Reckfaktoren

|  | P 1,0 | P 1,1 | P 1,2 | P 1,4 |
|---|---|---|---|---|
| Reckfaktor | 1 | 1,1 | 2,5 | 4,7 |
| Prüftemperatur [°C] | $\sigma_m$ [MPa] | $\sigma_m$ [MPa] | $\sigma_m$ [MPa] | $\sigma_m$ [MPa] |
| 23 | 76 | 135 | 223 | 294 |
| 40 | | 118 | 209 | 288 |
| 60 | | 113 | 195 | 270 |
| 80 | | 102 | 147 | 222 |

**Patentansprüche**

1. Gereckte Filamente enthaltend mindestens 80 Gew.-% lineare, verzweigte oder cylclische aliphatische oder teilaromatische Polyamide,
   wobei die Filamente gereckt wurden bei einer Temperatur zwischen Glasübergangstemperatur und Schmelzpunkt und
   wobei die Filamente unter voller Zuglast auf unter 100 °C abgekühlt werden.

2. Gereckte Filamente nach Anspruch 1, wobei die minimale Recktemperatur $T_{reck, min}$ mit Hilfe Gleichung (1):

$$T_{reck,min} \; = \; \left( \left( T_m - T_g \right) * X_C \right) + T_g \qquad\qquad (G1)$$

   bestimmt, wobei $T_m$ = Schmelzpunkt, $T_g$ = Glasübergangstemperatur und Xc die Kristallinität sind, und
   wobei die Kristallinität bestimmt wird mit Gleichung (2)

$$X_C = \; \frac{\Delta H_m}{\Delta H_m^0} \qquad\qquad (G2).$$

3. Gereckte Filamente nach einem der vorhergehenden Ansprüche, wobei bei Erwärmung auf eine Temperatur unterhalb des Schmelzpunktes nur eine geringe Schrumpfung/Relaxation in Zugrichtung aufweisen, bevorzugt maximal 6 % in Bezug auf die gereckte Länge.

4. Verfahren zur Herstellung der erfindungsgemäßen gereckten Filamente.

5. Verwendung der gereckten Filamente nach einem der Ansprüche 1 bis 4 zur Herstellung von Verbünden.

6. Verwendung der gereckten Filamente nach einem der Ansprüche 1 bis 4 zur Herstellung von Wickellagen.

Abb 1: graphische Darstellung der Ergebnisse nach Tabelle 1;

linke Gruppe Reckfaktor 1,1 (P 1,1); rechte Gruppe RF = 2,5 (P 1,2);

fette Schraffur: Relaxationstemperatur 80 °C, dünne Schraffur: Relaxationstemperatur 120 °C;

Schraffur senkrecht stellt die Schrumpfung in Reckrichtung und Schraffur quer stellt die Ausdehnung im rechten Winkel zur Reckrichtung dar

## BRUCHSPANNUNGEN

Legend:
- ◆ RF = 110%
- ■ RF = 250%
- ▲ RF = 470%
- ■ ungereckt

Abb 3: Auftragung der max strength, $\sigma_m$ [MPa] über Temperatur, bei der $\sigma_m$ bestimmt wurde, Bestimmungen für Proben mit unterschiedlichem Reckfaktor RF]

Europäisches
Patentamt

European
Patent Office

Office européen
des brevets

# EUROPÄISCHER RECHERCHENBERICHT

Nummer der Anmeldung

EP 18 19 9730

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | GB 598 820 A (DU PONT) 26. Februar 1948 (1948-02-26) * Seite 2, Zeile 30 ff; Ansprüche 1-7; Abbildung Figure * ----- | 1-6 | INV. D01D10/02 D02J1/22 D01F6/60 |
| X | US 5 011 645 A (THOMPSON JR ALFRED H [US]) 30. April 1991 (1991-04-30) * Zusammenfassung * * Spalte 3, Zeilen 4-21 * ----- | 1-6 | |
| A | US 5 104 969 A (CLARK III THOMAS R [US] ET AL) 14. April 1992 (1992-04-14) * Zusammenfassung * ----- | 1-6 | |

| RECHERCHIERTE SACHGEBIETE (IPC) |
|---|
| D01D D02J D01F |

Der vorliegende Recherchenbericht wurde für alle Patentansprüche erstellt

| Recherchenort | Abschlußdatum der Recherche | Prüfer |
|---|---|---|
| Den Haag | 12. März 2019 | Malik, Jan |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
    Dokument

EPO FORM 1503 03.82 (P04C03)

**EP 3 636 808 A1**

## ANHANG ZUM EUROPÄISCHEN RECHERCHENBERICHT
## ÜBER DIE EUROPÄISCHE PATENTANMELDUNG NR.

EP 18 19 9730

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-03-2019

| Im Recherchenbericht angeführtes Patentdokument | Datum der Veröffentlichung | Mitglied(er) der Patentfamilie | Datum der Veröffentlichung |
|---|---|---|---|
| GB 598820 A | 26-02-1948 | BE 464568 A<br>FR 924420 A<br>GB 598820 A | 12-03-2019<br>05-08-1947<br>26-02-1948 |
| US 5011645 A | 30-04-1991 | AR 242641 A1<br>BR 9002075 A<br>CA 2015931 A1<br>DE 69017510 D1<br>DE 69017510 T2<br>EP 0399262 A2<br>JP 2992566 B2<br>JP H03206115 A<br>MX 174286 B<br>US 5011645 A | 30-04-1993<br>13-08-1991<br>04-11-1990<br>13-04-1995<br>17-08-1995<br>28-11-1990<br>20-12-1999<br>09-09-1991<br>03-05-1994<br>30-04-1991 |
| US 5104969 A | 14-04-1992 | AU 637153 B2<br>BR 9005322 A<br>CA 2028062 A1<br>CN 1053459 A<br>DE 69012038 D1<br>DE 69012038 T2<br>EP 0423807 A1<br>ES 2058719 T3<br>JP 2733549 B2<br>JP H03249210 A<br>KR 0168633 B1<br>MX 166255 B<br>RU 2003740 C1<br>TR 26886 A<br>US 5104969 A | 20-05-1993<br>17-09-1991<br>21-04-1991<br>31-07-1991<br>06-10-1994<br>23-02-1995<br>24-04-1991<br>01-11-1994<br>30-03-1998<br>07-11-1991<br>15-01-1999<br>24-12-1992<br>30-11-1993<br>22-08-1994<br>14-04-1992 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004028803 A1
- WO 2010057982 A1
- DE 766441
- WO 2013190149 A1
- US 3869430 A
- WO 2015107024 A1
- US 3393252 A

**In der Beschreibung aufgeführte Nicht-Patentliteratur**

- **VAN KREVELEN.** Properties of Polymers. 2009